Europäisches Patentamt

European Patent Office

Office européen des brevets

(19)

(11) Publication number: **0 077 404**
**A1**

## EUROPEAN PATENT APPLICATION

published in accordance with Art. 158(3) EPC

(21) Application number: **82901162.6**

(22) Date of filing: **22.04.82**

Data of the international application taken as a basis:

(86) International application number:
**PCT/JP82/00138**

(87) International publication number:
**WO82/03708 (28.10.82 82/26)**

(51) Int. Cl.³: **G 06 F 3/00**
**G 06 F 13/00, G 06 F 9/06**
**G 05 B 19/02**

(30) Priority: **22.04.81 JP 60965/81**

(43) Date of publication of application:
**27.04.83 Bulletin 83/17**

(84) Designated Contracting States:
**CH DE FR GB LI**

(71) Applicant: **Fanuc Ltd**
**5-1, Asahigaoka, 3-chome**
**Hino-shi, Tokyo 191(JP)**

(72) Inventor: **KURAKAKE, Mitsuo**
**Izumi-Haitsu 103 3-3-10, Tamadaira**
**Hino-shi Tokyo 191(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) DATA PROCESSING SYSTEM.

(57) Microprocessors (3, 4) containing random access memories (RAM) (3b, 4b), a non-volatile memory (1) containing the control program of the microprocessors, and a loading unit (2) for transferring the content of the non-volatile memory to the microprocessors are connected via a data bus (9). Since the control program is transferred from the nonvolatile memory to the random access memory in the microprocessors in accordance with the relative relationship between the control program specified on the control panel (11) and the microprocessors when power is applied, the execution control program is facilitated.

Fig.1

## DESCRIPTION

DATA PROCESSING SYSTEM

Technical Field:

The present invention relates to a data processing system which can readily change a control program of its own, and more particularly to a data processing system which is well-suited for use in a microprocessor having a built-in memory.

Background Art:

In recent year, microprocessors have been extensively utilized for controlling various apparatuses with enhancement in the density of integration and enhancement in the operating speed. As such a controlling microprocessor, a microprocessor in the form of a single chip having a built-in memory capable of receiving a control program is convenient. In this regard, a read-only memory (hereinbelow, termed "ROM"), the stored content of which is not erased even when the supply of power is terminated, is used as the aforementioned memory for storing the control program but is disadvantageous in that it is not easy to change the control program. Mor specifically, most ROMs built in 1-chip microprocessors are mask ROMs, which cannot readily change programs. Although erasable ROMs are built in some 1-chip microprocessors, they have problems in price, supply and reliability because of larger LSI chips than in the mask ROMs.

The above points will be concretely described with regard to a servomotor control in a numerical control system. When applying a microprocessor to the control of a servomotor in a numerical control system, a large number of control programs are prepared for each motor or each control system which is to be controlled. Therefore, a predetermined control program suited to the motor control must be selected from among the control programs, so as to control the motor on the basis of the selected control program. To the end of selecting the predetermined control program and properly controlling the motor in this manner, it has been considered to employ an erasable ROM (EROM) mounted externally of the microprocessor, as the microprocessor memory, and to write the control program suited to the motor or the motor control, into the EROM. Since, however, the measure of employing the external EROM necessitates the ROM besides the processor fabricated in the form of a single chip, it increases the number of components and is not recommendable. It has also been considered to accommodate a plurality of control programs in a single ROM. However, the ROM requires a large capacity in order to receive all the control programs. This is disadvantageous from the standpoints of cost and installation space.

Accordingly, the present invention has for its object to provide a novel data processing system which can readily change a control program stored within a microprocessor.

Disclosure of the Invention:

Disclosed in the present invention is a data processing system comprising a microprocessor having an internal random access memory, a nonvolatile memory in which control programs of the microprocessor are stored, a loading unit which transmits the content of the nonvolatile memory to the microprocessor, and a data bus which connects them, whereby the control program stored in the nonvolatile memory is transmitted to the random access memory of the microprocessor by the loading unit, so as to process data in accordance with this control program. This data processing system is so constructed as to transmit the control program from the nonvolatile memory storing the control programs, to the random access memory of each microprocessor. Therefore, each microprocessor need not be equipped with ROMs for the various control programs and the change in control programs can be achieved with ease. In particular, the system is very useful for a numerical control system in which complicated control is required.

Brief Description of the Drawings:

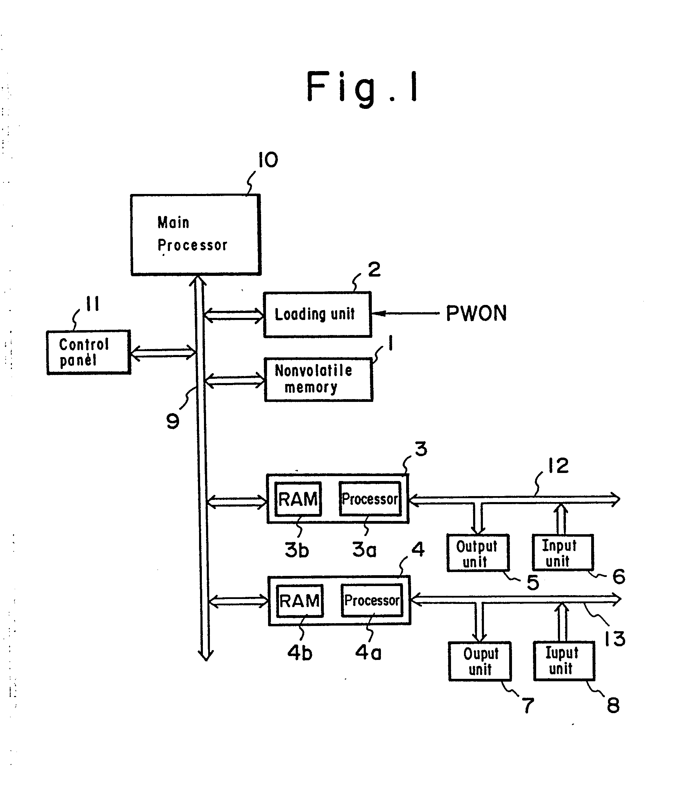

Figure 1 is a block diagram of an embodiment of the present invention.

Best Mode for Carrying out the Invention:

The present invention will now be described in detail in connection with an embodiment.

Figure 1 shows a block diagram of one embodiment of the present invention. In the figure, numeral 1 designates a nonvolatile memory which stores control programs and which is constructed of, for example, a bubble memory or a ROM. Numeral 2 designates a loading unit which reads out and transmits the content of the nonvolatile memory 1, and which is constructed of a microprocessor having a built-in ROM or random access memory (hereinbelow, termed "RAM"). Microprocessors 3 and 4 are respectively constructed of processors proper 3a and 4a, and RAMs 3b and 4b for storing the control programs of the processors 3a and 4a. Numerals 5 and 7 indicate output units which are controlled by the microprocessors 3, 4, and which are motors in this example. Numerals 6 and 8 indicate input units, which are, in this example, detectors that detect the states of the motors, e.g., the rotating speeds thereof and deliver them to the microprocessors 3, 4. Shown at numeral 9 is a main data bus which connects the nonvolatile memory 1, loading unit 2 and microprocessors 3, 4 to one another, and which is also connected to a main processor 10, a control panel 11, etc. for the numerical control. Move commands, commanded speeds, etc. are entered from the main processor 10 to the microprocessors 3, 4 through the data bus. Data buses 12, 13 interconnect the microprocessors 3, 4, output units 5, 7 and input units 6, 8.

Next, the operations of these constituents will be explained.

In the nonvolatile memory 1, various control programs for controlling the respective motors are stored with identifier codes (for example, names) assigned thereto. In addition, it is assumed that the respective microprocessors 3 and 4 are prepared for the respective controllable axes in the numerical control.

When power from a power supply is introduced (a power "on" signal PWON goes to logical "1"), the loading unit 2 starts upon sensing the introduction power and reads out the content of the nonvolatile memory 1 in accordance with a control program of its own stored in the built-in ROM. The corresponding relationships between the respective microprocessors 3, 4 and the identification numbers, e.g., control program names of the control programs required for these microprocessors are set with the control panel 11 in advance. Accordingly, the loading unit 2 transmits the required control programs to the RAMs 3b, 4b of the respective microprocessors 3, 4 through the data bus 9 while referring to the corresponding relationships and stores them in the RAMs 3b, 4b.

The loading unit 2 further sends start signals to the respective microprocessors 3, 4 through the data bus 9 after the end of the above transmission. In response to the signals, the microprocessors 3, 4 start operating in accordance with the control programs of the RAMs 3b, 4b. On the other hand, speed commands and movement value commands are given from the aforementioned main processor through the data bus 9, so that the respective microprocessors 3 and 4 control the motors (output units) 5 and 7 through the data buses 12 and 13.

A numerical control system is originally equipped with a nonvolatile memory in order to store various parameters and machining data. Therefore, a part of this memory can be utilized without specially providing the nonvolatile memory 1 stated before. In addition, the corresponding relationships between the control programs and the microprocessors must be easily settable and changeable. However, once they have been set, they are hardly ever altered. Switches are therefore disposed inside the control panel or the like so as to establish semifixed relationships, in order that the corresponding relationships may be set by means of only the switches. This measure prevents changes in the corresponding relationships and a resulting malfunction as may be caused by accidental operation attributed to the fact that switches protrude from the outside of the apparatus.

Although a numerical control system has been exemplified in the above description, the invention is not restricted thereto but is also utilizable for other control systems.

Industrial Applicability:

As set forth above, according to the present invention, a data processing system is so constructed as to transmit a control program from a nonvolatile memory storing control programs, to the random access memory of each microprocessor. Therefore, each microprocessor need not be equiped with ROMs for the respective control programs, and a change in control programs can be achieved with ease. In particular, the system is very useful for a numerical control system in which complicated control is required.

WHAT IS CLAIMED IS:

1. A data processing system characterized by comprising a microprocessor having an internal random access memory, a nonvolatile memory in which control programs of said microprocessor are stored, a loading unit which transmits the content of said nonvolatile memory to said microprocessor, and a data bus which connects them, whereby the control program stored in said nonvolatile memory is transmitted to said random access memory of said microprocessor by said loading unit.

2. A data processing system as defined in Claim 1, characterized in that a main processor for controlling said microprocessor is further ocnnected to said data bus.

3. A data processing system as defined in Claim 1 or Claim 2, characterized in that a plurality of such microprocessors are connected to said data bus.

4. A data processing system as defined in Claim 1, Claim 2 or Claim 3, characterized in that an input/output unit to be controlled is connected to said microprocessor through another data bus.

5. A data processing system as defined in Claim 1, Claim 2, Claim 3 or Claim 4, characterized in that said loading unit is constructed of a memory and a microprocessor.

6. A data processing system as defined in Claim 4, characterized in that said unit to be controlled is a motor.

I

# Fig.1

# INTERNATIONAL SEARCH REPORT

**0077404**

International Application No. PCT/JP 82/00138

## I. CLASSIFICATION OF SUBJECT MATTER (if several classification symbols apply, indicate all) ³

According to International Patent Classification (IPC) or to both National Classification and IPC

Int Cl³  GO6F 3/00, GO6F 13/00, GO6F 9/06, GO5B 19/02

## II. FIELDS SEARCHED

| Minimum Documentation Searched⁴ | |
|---|---|
| Classification System | Classification Symbols |
| IPC | G06F 3/00, G06F 13/00, G06F 9/06 G05B 19/02 |

| Documentation Searched other than Minimum Documentation to the Extent that such Documents are Included in the Fields Searched⁵ | |
|---|---|
| | Kokai Jitsuyo Shinkan Koho 1971-1781 |

## III. DOCUMENTS CONSIDERED TO BE RELEVANT¹⁴

| Category* | Citation of Document,¹⁶ with indication, where appropriate, of the relevant passages¹⁷ | Relevant to Claim No.¹⁸ |
|---|---|---|
| X | JP, A, 50-109635 (Hitachi, Ltd.) 28. August, 1975 (28.08.75) | 1-6 |
| X | JP, A, 54-114136 (Hitachi, Ltd.) 6. September, 1979 (06.09.79) | 1-6 |
| X | JP, A, 55-41553 (Fujitsu Ltd.) 24. March, 1980 (24.03.80) | 1-6 |
| A | JP, A, 53-63836 (Nippon Telegraph & Telephone Public Corp.) 7. June, 1978 (07.06.78) | 1-6 |

* Special categories of cited documents:¹⁵
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search² | Date of Mailing of this International Search Report² |
|---|---|
| July 20, 1982 (20.07.82) | July 26, 1982 (26.07.82) |
| International Searching Authority¹ | Signature of Authorized Officer²⁰ |
| Japanese Patent Office | |

Form PCT/ISA/210 (second sheet) (October 1981)